# EUROPÄISCHE PATENTSCHRIFT

(11) **EP 1 339 260 B1**
(45) Veröffentlichungstag und Bekanntmachung des Hinweises auf die Patenterteilung: **29.10.2008**
(21) Anmeldenummer: 03450018.1
(22) Anmeldetag: 17.01.2003
(51) Int. Cl.: H05B 3/74

(54) **Temperaturfühler**
Temperature sensor
Capteur de température

(30) Priorität: 25.02.2002 AT 2792002
(43) Veröffentlichungstag der Anmeldung: 27.08.2003
(60) Teilanmeldung: 07021471.3
(73) Patentinhaber: Electrovac AG, 3400 Klosterneuburg (AT)
(72) Erfinder: Morbitzer, Hans-Peter, Ing., 3452 Atzenbrugg (AT)
(74) Vertreter: Gibler, Ferdinand

(56) Entgegenhaltungen:
- EP-A- 0 476 304
- EP-A- 0 884 927
- GB-A- 2 278 237

## Beschreibung

Die Erfindung betrifft einen Temperaturfühler mit einem Füblerrohr und einem darin angeordneten Fühlerstab, wobei das Fühlerrohr und der Fühlerstab unterschiedliche Wärmeausdehnungskocffizienten aufweisen, wobei das eine Ende des Fühlerstabes im Bereich des freien Endes des Fühlerrohres abgestützt und das andere Ende des Fühlerstabes als Betätigungsglied einer von einem Isolationskörper zumindest teilweise umgebenen Schaltkontakt-Einheit ausgebildet ist, und wobei das Fühlerrohr mit dem darin angeordneten Fühlerstab durch eine Durchbrechung des Isolationskörpers hindurchgeführt ist, an welcher Durchbrechung eine Stützlasche vorgesehen ist, die entweder unmittelbar mit dem an der Durchbrechung abgestützten Fühlerrohr oder mit einem in die Durchbrechung eingesetzten Rohrsitz verbunden ist, an welchem Rohrsitz das Fühlerrohr abgestützt ist.

Die EP 884 927 A zeigt ein Schaltglied für Elektrogeräte und Elektrowärmegeräte umfassend einen Schnappschalter.

Die GB 2 278 237 A zeigt einen Temperaturfühler zur Anordnung in Elektrowärmegeräten.

Bei bisher bekannten Temperaturfühlern wurde der Rohrsitz des Fühlerrohres in der Durchbrechung des Isolationskörpers lediglich mit der Stützlasche verschraubt oder diese wurden durch Nieten oder Verschränken miteinander verbunden. Bei dieser Bauweise ergeben sich allerdings Öffnungen in das Innere des Isolationskörpers, welcher die Schaltkontakt-Einheit beherbergt. Die von außen eindringenden Partikeln beeinflussen das Schaltverhalten der Schaltkontakt-Einheit negativ.

Aufgabe der Erfindung ist es daher, einen Temperaturfühler der eingangs genannten Art anzugeben, bei dem der Isolationskörper mit der Schaltkontakt-Einheit im Bereich der Durchbrechung für das Fühlerrohr staubdicht gegenüber dem Außenbereich abgeschlossen ist. Weitere Aufgabe der Erfindung ist es, einen Temperaturfühler anzugeben, der ein rasches, dauerhaftes und spielfreies Festlegen des Fühlerrohres oder des Fühlerrohr-Rohrsitzes sowie eine kostengünstige Ausbildung der verwendeten Komponenten ermöglicht.

Dies wird erfindungsgemäß dadurch erreicht, daß die Stützlasche mit dem Rohrsitz oder unmittelbar mit dem Fühlerrohr verschweißt ist, sodaß der die Isolationskörper-Durchbrechung umgebende Wandungsbereich des Isolationskörpers zwischen der Stützlasche und dem Rohrsitz bzw. dem Fühlerrohr gehalten ist.

Durch den Schweißvorgang kann die Stützlasche so mit dem Fühlerrohr oder mit dem Rohrsitz für das Fühlerrohr verbunden werden, daß keine Staubteilchen von außen in das Innere des Isolationskörpers eindringen könnten- Der Schweißvorgang ermöglicht darüber hinaus ein kostengünstiges Ausführen der zu verbindenden Teile und ein rasches Ausführen der Verbindung, die robust ist und eine lagesichere Anordnung der zu verbindenden Teile ergibt.

Ein unmittelbares Verschweißen des Fühlerrohres mit der Stützlasche setzt ein metallisches Fühlerrohr voraus, weshalb gemäß einer weiteren Ausbildung der Erfindung das Fühlerrohr aus einem Metall, insbesondere aus einem hochtemperaturbeständigen Metall, vorzugsweise aus einer CrNi-Legierung gebildet sein kann.

Die Stützlasche kann auch für die Festlegung des Temperaturfühlers an einer dafür bestimmten Vorrichtung vorgesehen sein. Eine Weiterbildung der Erfindung kann daher darin bestehen, daß die Stützlasche - in an sich bekannter Weise - mindestens eine Bohrung zur Befestigung des Temperaturfühlers an einem Heizkörper aufweist.

Eine weitere Variante der Erfindung kann darin bestehen, daß der Rohrsitz rohrförmig ausgebildet ist, dessen Außendurchmesser kleiner als der Durchmesser der Isolationskörper-Durchbrechung und dessen Innendurchmesser größer als der Durchmesser des Fühlerrohres ausgebildet ist, und daß an einem Ende des Rohrsitzes ein Rohrflansch ausgebildet ist. Der rohrförmige Rohrsitz mit Flansch ermöglicht einen satten Sitz des Fühlerrohres und die Bereitstellung einer stabilen Abstützung des Fühlerrohres gegenüber dem Isolationskörper.

Eine ausreichend stabile und dauerhafte Verschweißung läßt sich dadurch erreichen, daß die Stützlasche eine Durchbrechung aufweist, durch die das Fühlerrohr hindurchgeführt ist, und daß um die Durchbrechung im Bereich der Stoßfläche mit dem Rohrsitz Schweißpunkt-Erhebungen angeordnet sind.

Eine kostengünstige und einfach herstellbare Form der Abstützung stellt eine Variante der Erfindung dar, bei der das Fühlerrohr über einen flanschförmigen Ansatz an der Isolationskörper-Durchbrechung oder am Rohrsitz abgestützt ist.

Ein stabiler Sitz des Fühlerrohres kann in weiterer Ausbildung der Erfindung dadurch erreicht werden, daß das Fühlerrohr im Bereich der Isolationskörper-Durchbrechung einen größeren Durchmesser als in seinem vom Isolationskörper vorragenden Bereich aufweist. Das derartig aufgeweitete Ende des Fühlerrohres erhöht das für eine Biegung erforderliche Biegemoment.

Weiters wird eine Temperaturfühler mit einem Fühlerrohr und einem darin angeordneten Fühlerstab beschrieben, wobei das Fühlerrohr und der Fühlerstab unterschiedliche Wärmeausdehnungskoeffizienten aufweisen, und wobei das eine Ende des Fühlerstabes an einem Endstück im Bereich des freien Endes des Fühlerrohres abgestützt und das andere Ende des Fühlerstabes als Betätigungsglied einer Schaltkontakt-Einheit ausgebildet ist.

Temperaturfühler, die aufgrund der unterschiedlichen Wärmeausdehnungskoeffizienten ihrer Komponenten die Betätigung eines Schaltkontaktes bewirken, haben sich aufgrund ihrer Robustheit in der Praxis vielfach bewährt. Da diese in sehr hohen Stückzahlen hergestellt werden, wird eine möglichst zuverlässige und kostengünstige Bauform angestrebt. Insbesondere soll eine möglichst kleine Baugröße und ein möglichst geringer Materialverbrauch bei der Erzeugung der Temperaturfühler erreicht werden, zugleich soll aber eine sichere Betätigung eines Schaltkontaktsystems gewährleistet sein. Die für die Kontaktbetätigung zur Verfügung stehende aktive Länge, die bei Erwärmung des Temperaturfühlers von der Längenausdehnung betroffen ist, soll daher im Vergleich zur Gesamtlänge des Temperaturfühlers möglichst hoch sein.

Bei dem gemäß EP 476 304 A verwendeten Endstück für das Fühlerrohr, welches in den Endteil desselben hineinreicht, geht ein erheblicher Teil der Fühlerrohrlänge für die aktive Länge des Temperaturfühlers verloren.

Aufgabe ist es daher, einen Temperaturfühler der eingangs genannten Art anzugeben, bei dem eine möglichst große aktive Länge des Temperaturfühlers erzielt wird.

Dies wird dadurch erreicht, daß das Endstück des Fühlerrohres durch eine das freie Ende des Fühlerrohres abschließende Rohrkappe gebildet ist, die unlösbar mit dem Fühlerrohr verbunden ist, und daß das eine Ende des Fühlerstabes an der dem Inneren des Fühlerrohres zugekehrten Innenseite der Rohrkappe abgestützt ist.

Die Rohrkappe schließt das Fühlerrohr an dessen äußerstem Ende ab und verlängert dieses im Ausmaß des darüber hinausragenden Teils der Rohrkappe, sodaß zumindest die gesamte Rohrlänge als aktive Länge wirkt. Weist die Rohrkappe einen ähnlichen Wärmeausdehnungskoeffizienten wie das Fühlerrohr auf, so vergrößert sie die aktive Länge desselben. Schließlich ergibt sich durch die Rohrkappe ein verläßlicher Abschluß des Fühlerrohres, sodaß dieser nach außen vollkommen abgedichtet ist, wodurch die Wirkung äußerer Einflüsse auf das Ausdehnungsverhalten des Temperaturfühlers verläßlich verhindert werden kann.

Eine dauerhafte und zugleich ausreichend feste Verbindung zwischen der Rohrkappe und dem Fühlerrohr kann gemäß einer Weiterbildung dadurch erreicht werden, daß die Rohrkappe mit dem Fühlerrohr verschweißt, insbesondere laser-verschweißt ist.

In weiterer Ausbildung kann die Rohrkappe durch ein Rohrstück gebildet sein und der Innendurchmesser des Rohrstückes größer als der Außendurchmesser des Fühlerrohres sein. Die Rohrkappe kann an sich eine beliebige Form haben, solange diese gewährleistet, daß der im Fühlerrohr verlaufende Fühlerstab sicher gegenüber dem Endbereich des Fühlerrohres abgestützt ist. Eine Rohrkappe in Form eines Rohrstückes ist einerseits einfach herstellbar und kann andererseits auf einfache Weise an das Fühlerrohr angepaßt werden.

Eine andere Variante kann darin bestehen, daß die Rohrkappe durch ein in das freie Ende des Fühlerrohres eingeschobenes Rohrstück gebildet ist, wobei das freie Ende des Fühlerrohres einen Endbereich mit einem gegenüber dem Innendurchmesser des Fühlerrohres vergrößerten Innendurchmesser aufweist, sodaß der Innendurchmesser des durchmesser-vergrößerten Endbereiches größer als der Außendurchmesser des Rohrstückes ist.

Durch den durchmesser-vergrößerten Endbereich des Fühlerrohres kann die Rohrkappe in das Fühlerrohr eingeführt und dort fixiert werden. Obwohl das so eingesetzte Rohrstück teilweise in das Fühlerrohr hineinreicht, wird die aktive Länge des Fühlerrohres nicht verkleinert, da der Fühlerstab an der aus dem Fühlerrohr ragenden Endfläche des Rohrstückes abgestützt ist.

Gemäß einer weiteren Ausbildung kann das Rohrstück an einer Seite durch eine im wesentlichen normal zur Rohrachse verlaufende, planebene Endfläche abgeschlossen sein. An der Innenseite dieser Endfläche stützt sich das Ende des Fühlerstabes ab.

Um eine exakte Anlage des Fühlerstabes innerhalb des Fühlerrohres zu erreichen, kann in weiterer Ausbildung vorgesehen sein, daß die Endfläche des Rohrstückes eine mittige, nach innen gerichtete Wölbung, insbesondere in Form einer Kugelkalotte, aufweist, an welcher der Fühlerstab abgestützt ist. Bei Verkippen des Fühlerstabes verringert diese Wölbung Veränderungen der Stützlänge, welche sich auf das Schaltverhalten des Temperaturfühlers auswirken.

Eine besondere Eignung für Hochtemperaturanwendungen läßt sich dadurch erzielen, daß das Fühlerrohr aus einem hochtemperaturbeständigen Metall, vorzugsweise aus einer CrNi-Legierung gebildet ist.

Ein im Vergleich zu Metall sehr niedriger Wärmeausdehnungskoeffizient kann dadurch erreicht werden, daß gemäß einer weiteren Ausführungsform der Fühlerstab aus einer Keramik oder Quarzglas gebildet ist.

Wenn die Rohrkappe den gleichen Wärmeausdehnungskoeffizienten wie das Fühlerrohr hat, dann ergibt sich durch die Rohrkappe eine Verlängerung des Fühlerrohres über dessen Ende hinaus, was eine Erhöhung der aktiven Länge des Fühlerrohres zur Folge hat. In diesem Zusammenhang kann gemäß einer weiteren Ausbildung vorgesehen sein, dass die Rohrkappe aus einem hochtemperaturbeständigen Metall, vorzugsweise aus einer CrNi-Legierung gebildet ist.

Die Erfindung wird nachfolgend anhand der in den Zeichnungen dargestellten Ausführungsbeispiele eingehend erläutert. Es zeigt dabei
Fig.1 einen Schnitt durch einen Heizkörper mit einem Temperaturfühler entlang der in Fig.2 gezeigten Linie I-I;
Fig.2 eine Draufsicht auf den in Fig. 1 gezeigte Heizkörper;
Fig.3 einen Längsschnitt durch eine Ausführungsform des erfindungsgemäßen Temperaturfühlers;
Fig.4 einen teilweisen Schnitt durch eine weitere Ausführungsform des erfindungsgemäßen Temperaturfühlers;
Fig.5 einen teilweisen Schnitt durch eine weitere Ausführungsform des erfindungsgemäßen Temperaturfühlers und
Fig.6 einen teilweisen Längsschnitt durch eine weitere Ausführungsform des erfindungsgemäßen Temperaturfühlers.

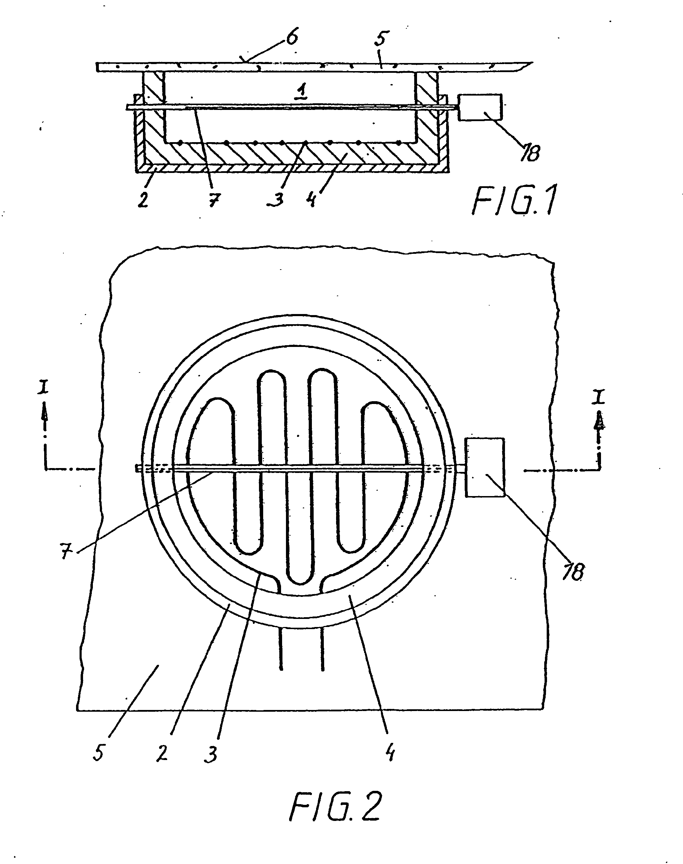

Fig.1 und 2 zeigen einen Strahlungs-Heizkörper 1 mit einer Heizplatte 5 aus Metall, Glaskeramik od. dgl., die von einer mäanderförmig sich im Bodenbereich des Strahlungs-Heizkörpers 1 erstreckenden Heizwendel 3 beheizbar ist, welche in einer Einbettmasse 4 eingebettet ist. Die Einbettmasse 4 ist ihrerseits von einem Topf 2 umgeben, der den Strahlungs-Heizkörper 1 nach unten hin abschließt. Die Oberseite der Heizplatte 5 bildet z.B. eine Kochfläche 6 aus, auf der Töpfe, Pfannen od. dgl. erhitzt werden können.

Zwischen der Heizplatte 5 und der Heizwendel 3 ist ein Temperaturfühler 7 angeordnet, der mit einem Schaltkopf 18 in Verbindung steht, wobei der Temperaturfühler 7 durch seitliche Bohrungen des Strahlungs-Heizkörpers 1 hindurchgeführt ist.

Der Temperaturfühler 7 ist somit der Temperatur im Strahlungsraum zwischen der Heizwendel 3 und der Heizplatte 5 ausgesetzt und kann diese somit erfassen, sodaß die Temperatur der Heizplatte 5 mit Hilfe des Temperaturfühlers 7 und des damit gesteuerten Schaltkopfes 18 geregelt werden kann. Er ist aber im Rahmen der Erfindung nicht auf diese konkrete Anwendungsform beschränkt.

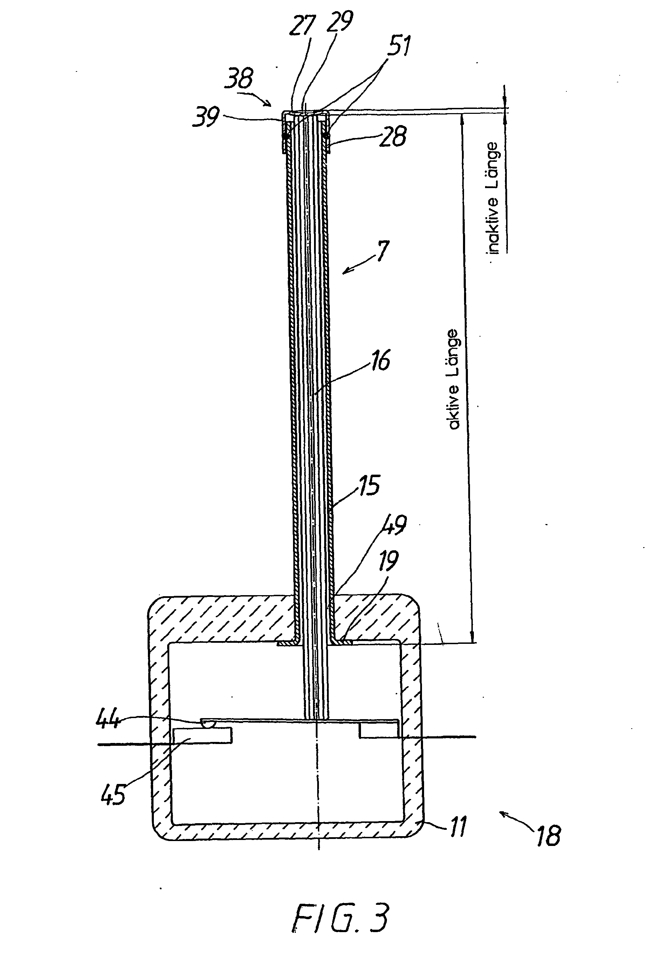

Aus Fig.3 geht der innere Aufbau und die Funktionsweise des Temperaturfühlers 7 hervor, der ein Fühlerrohr 15 und einen darin angeordneten Fühlerstab 16 umfaßt, wobei das Fühlerrohr 15 und der Fühlerstab 16 unterschiedliche Wärmeausdehnungskoeffizienten aufweisen. Eine Erwärmung des Temperaturfühlers 7 hat daher eine unterschiedliche Längenausdehnung des Fühlerrohres 15 und des Fühlerstabes 16 zur Folge.

Da das eine Ende des Fühlerstabes 16 an einem Endstück 38 im Bereich des freien Endes des Fühlerrohres 15 abgestützt und das andere Ende des Fühlerstabes 16 als Betätigungsglied einer Schaltkontakt-Einheit 44, 45 innerhalb des Schaltkopfes 18 ausgebildet ist, führt die unterschiedliche Längenausdehnung des Fühlerrohres 15 und des Fühlerstabes 16 zu einer Relativverschiebung des dem freien Ende des Fühlerrohres 15 gegenüberliegenden Ende des Fühlerstabes 16, die zur Betätigung der Schaltkontakt-Einheit 44, 45 führt. Nicht eingezeichnet in Fig.3 ist dabei die von z.B. einer Feder ausgeübte Vorspannung auf den Fühlerstab 16, die diesen gegen das Endstück 38 des Fühlerrohres 15 drückt.

Ist nun der Wärmeausdehnungskoeffizient des Fühlerrohres 15 größer als der des Fühlerstabes 16, so verschiebt sich während eines im Bereich des Temperaturfühlers stattfindenden Aufheizvorganges bei der in Fig.3 gezeigten Schaltkontakt-Einheit 44, 45 das Ende des Fühlerstabes 16 in Richtung nach oben und die auf das Kontaktstück 45 gedrückte Kontaktfeder 44 öffnet den geschlossenen Schaltkontakt. Durch geeignete Wahl des Wärmeausdehnungskoeffizienten von Fühlerrohr 15 und Fühlerstab 16 sowie durch entsprechende Positionierung des Endstückes 38 kann somit die Schaltcharakteristik der Schaltkontakt-Einheit 44, 45 des Schaltkopfes 18 beeinflußt werden.

Im Ausführungsbeispiel gemäß Fig.3 ist das Fühlerrohr 15 aus einem Metall, insbesondere aus einem hochtemperaturbeständigen Metall, vorzugsweise aus einer CrNi-Legierung, der Fühlerstab 16 aus einer Keramik oder Quarzglas gebildet.

Das Fühlerrohr 15 ist an dem schaltkontaktseitigen Ende mit einem Flansch 19 versehen, mit dem es gegen einen Isolationskörper 11 abgestützt ist, der die Schaltkontakt-Einheit 44, 45 umgibt. Dabei ist das Fühlerrohr 15 durch eine Durchbrechung 49 des Isolationskörpers 11 hindurchgeführt.

Erfindungsgemäß ist vorgesehen, daß das Endstück 38 des Fühlerrohres 15 durch eine das freie Ende des Fühlerrohres 15 abschließende Rohrkappe 39 gebildet ist, die unlösbar mit dem Fühlerrohr 15 verbunden ist, wobei das eine Ende des Fühlerstabes 16 an der dem Inneren des Fühlerrohres 15 zugekehrten Innenseite der Rohrkappe 39 abgestützt ist.

Vorzugsweise ist die Rohrkappe 39 mit dem Fühlerrohr 15 verschweißt, insbesondere laser-verschweißt. Dazu wird die Rohrkappe 39 auf das freie Ende des Fühlerrohres 15 aufgesetzt und dann mittels Laserbeaufschlagung verschweißt. Die Schweißnaht muß dem gegen die Innenseite der Rohrkappe 39 wirkenden Druck des Fühlerstabes 16 standhalten.

Im Ausführungsbeispiel gemäß Fig.3 ist der Querschnitt des Fühlerrohres 15 kreisförmig ausgebildet, dieser kann aber im Rahmen der Erfindung - ebenso wie der Querschnitt des Fühlerstabes 16 - in beliebiger Form ausgeführt sein

Dementsprechend ist die Rohrkappe 39 in Fig.3 durch ein Rohrstück 28 gebildet, dessen Innendurchmesser größer als der Außendurchmesser des Fühlerrohres 15 ist und das an einer Seite durch eine im wesentlichen normal zur Rohrachse verlaufende, planebene Endfläche 27 abgeschlossen ist. Das derartig mit der Endfläche 27 versehene Rohrstück 28 kann z.B. aus einem tiefgezogenen Blechteil gebildet sein.

Das über das freie Ende des Fühlerrohres 15 gestülpte Rohrstück 28 wird mit dem Fühlerrohr 15 verschweißt.

Die Endfläche 27 des Rohrstückes 28 weist eine mittige, nach innen gerichtete Wölbung, insbesondere in Form einer Kugelkalotte 29, auf, an welcher der Fühlerstab 16 abgestützt ist. Vorzugsweise ist die Rohrkappe 39 aus demselben Metall wie das Fühlerrohr 15, insbesondere aus einem hochtemperaturbeständigen Metall, vorzugsweise aus einer CrNi-Legierung gebildet.

Die aufgrund einer Temperaturerhöhung erzielbare Relativverschiebung zwischen dem Fühlerrohr 15 und dem Fühlerstab 16 hängt von den unterschiedlichen Wärmeausdehnungskoeffizienten, von der Temperaturdifferenz aber auch von der für die Ausdehnungsbewegung aktiv wirkenden Länge der Kombination Fühlerrohr-Fühlerstab ab.

Der Vorteil der Rohrkappe 39 besteht in der hohen aktiven Länge des erfindungsgemäßen Temperaturfühlers 7, die für die Temperaturausdehnung zur Verfügung steht, wie aus Fig. 3 ersichtlich ist. Da die Rohrkappe 39 selbst einer Wärmeausdehnung unterliegt, addiert ihre Ausdehnung sich zur Wärmeausdehnung des Fühlerrohres 15 und erhöht somit die Längendifferenz im Vergleich zur Wärmeausdehnung des Fühlerstabes 16, der einen geringeren Wärmeausdehnungskoeffizienten aufweist.

Die in Fig.3 eingezeichnete inaktive Länge entspricht dabei praktisch nur der Wandstärke der Endfläche 27 der Rohrkappe 39.

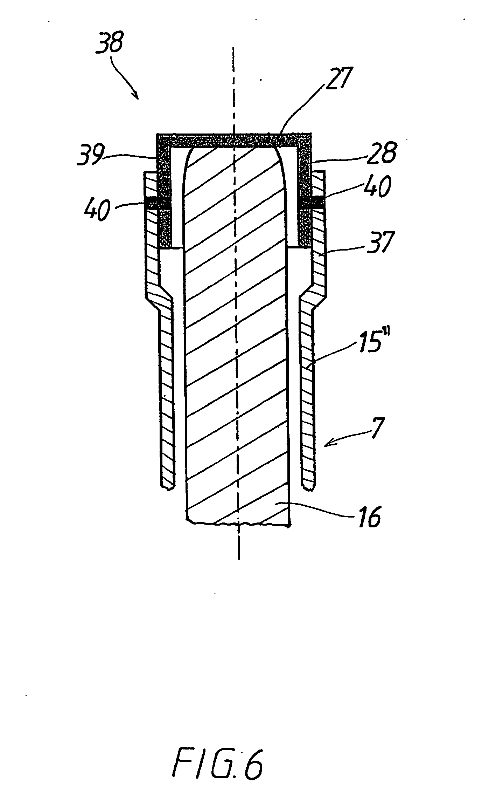

Fig.6 zeigt eine Ausführungsform des erfindungsgemäßen Temperaturfühlers 7, bei dem die Rohrkappe 39 durch ein in das freie Ende des Fühlerrohres 15" eingeschobenes Rohrstück 28 mit einer planebenen Endfläche 27 gebildet ist. Das freie Ende des Fühlerrohres 15" weist dabei einen Endbereich 37 mit einem gegenüber dem Innendurchmesser des Fühlerrohres 15" vergrößerten Innendurchmesser auf, sodaß der Innendurchmesser des durchmesservergrößerten Endbereiches 37 größer als der Außendurchmesser des Rohrstückes 28 ist. Die Rohrkappe 39 wird in den durchmesser-vergrößerten Endbereich 37 eingesetzt und an Verbindungsstellen 40 verschweißt oder vernietet.

Der z.B. in Fig.3 gezeigte Isolationskörper 11 ist vorzugsweise aus einer temperaturbeständigen Keramik gebildet, die unverrückbar am Heizkörper oder einer sonstigen Vorrichtung festgelegt sein muß, damit eine reproduzierbare Temperaturmessung ermöglicht werden kann.

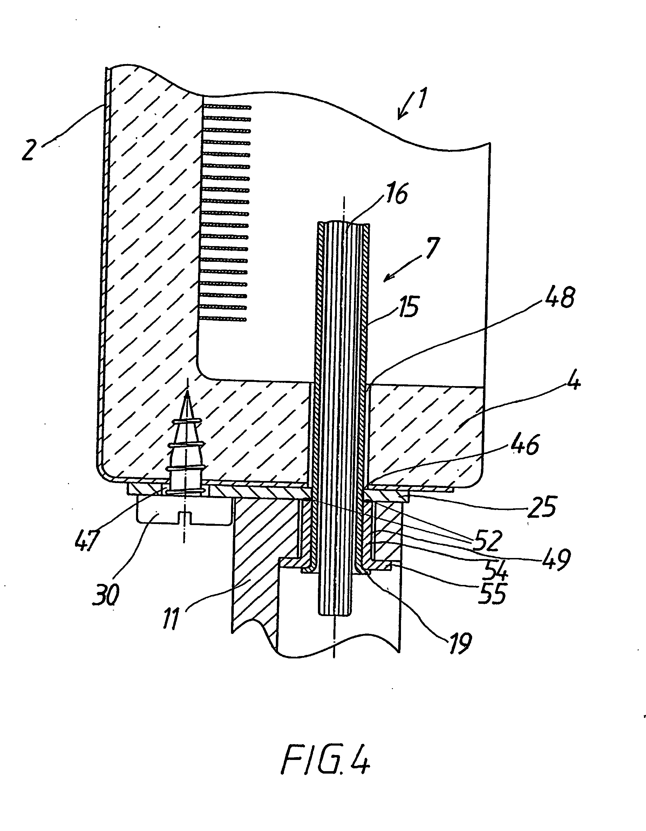

Zu diesem Zweck ist - wie in Fig.4 gezeigt - üblicherweise eine Stützlasche 25 vorgesehen, die Bohrungen 47 zur Befestigung des Temperaturfühlers 7 am Heizkörper 1 aufweist, welche mittels Schrauben 30 erfolgt, die durch die Bohrungen 47 hindurch in die Einbettmasse 4 getrieben werden.

Die Stützlasche 25 ist mit einem in die Durchbrechung 49 eingesetzten Rohrsitz 54 verbunden, an dem das Fühlerrohr 15 über einen flanschförmigen Ansatz 19 abgestützt ist. Das Fühlerrohr 15 kann dabei mit großem Spiel oder spielarm im Rohrsitz 54 verlaufen oder aber in diesen eingepreßt bzw. mit diesem verschweißt sein.

Erfindungsgemäß ist die Stützlasche 25 mit dem Rohrsitz 54 verschweißt, sodaß der die Isolationskörper-Durchbrechung 49 umgebende Wandungsbereich des Isolationskörpers 11 zwischen der Stützlasche 25 und dem Rohrsitz 54 gehalten ist. Dadurch ist der Rohrsitz 54 mit der Stützlasche so verbunden, daß der Rohrsitz 54 gegenüber dem Isolationskörper 11 weder verrutschen noch verkippen kann.

Der Rohrsitz 54 ist dabei rohrförmig ausgebildet, dessen Außendurchmesser kleiner als der Durchmesser der Isolationskörper-Durchbrechung 49 und dessen Innendurchmesser größer als der Durchmesser des Fühlerrohres 15 ausgebildet ist. An einem Ende des Rohrsitzes 54 ist ein Rohrflansch 55 ausgebildet, der an der Wandung des Isolationskörpers 11 anliegt.

Zur Durchführung des Fühlerrohres 15 weist die Stützlasche 25 eine Durchbrechung 46 auf, wobei im Bereich der Stoßfläche mit dem Rohrsitz 54 Schweißpunkt-Erhebungen 52 angeordnet, z.B. eingeprägt sind, die das Verschweißen des Rohrsitzes 54 mit der Stützlasche 25 vereinfachen. Sobald der Rohrsitz 54 von der einen Seite der Isolationskörper-Durchbrechung 49 eingesetzt ist und die Stützlasche 25 von der anderen Seite der Isolationskörper-Durchbrechung 49 in Stoßkontakt mit dem Rohrsitz 54 gebracht worden ist, kann die Schweißung durch geeignetes Anlegen von Elektroden und Beschicken mit Strom durchgeführt werden. Die Stützlasche 25 liegt dabei mit ihren Schweißpunkt-Erhebungen 52 auf der Stirnseite des Rohrsitzes 54 auf. Da der Übergangswiderstand an den Schweißpunkt-Erhebungen 52 besonders hoch ist, kommt es dort zur Zündung eines Schweiß-Lichtbogens, sodaß der Schweißvorgang bevorzugt an den Schweißpunkt-Erhebungen 52 in Gang gesetzt wird.

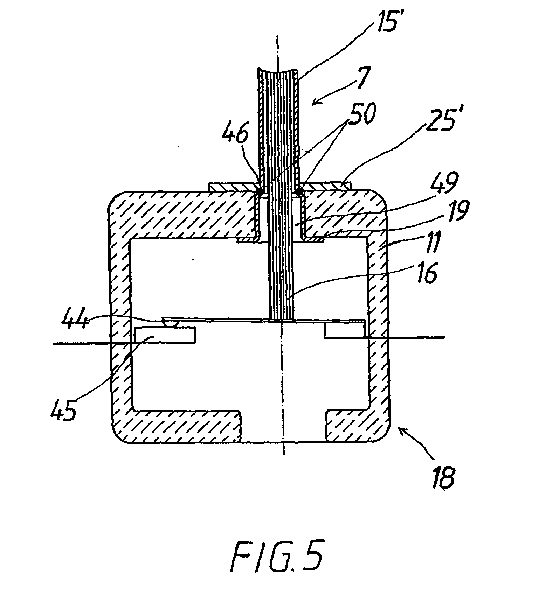

In Fig.5 ist eine Ausführungsform der Erfindung gezeigt, bei der die Stützlasche 25 unmittelbar mit dem an der Durchbrechung 49 abgestützten Fühlerrohr 15 verschweißt ist, sodaß der die Isolationskörper-Durchbrechung 49 umgebende Wandungsbereich des Isolationskörpers 11 zwischen der Stützlasche 25 und dem Fühlerrohr 15 gehalten ist. Um eine höhere Stabilität der Abstützung des Fühlerrohres 15 gegenüber dem Isoaltionskörper 11 zu erzielen, weist das Fühlerrohr 15 im Bereich der Isolationskörper-Durchbrechung 49 einen größeren Durchmesser als in seinem vorragenden Bereich auf.

Das Fühlerrohr 15 ist dabei wieder bevorzugt aus einem Metall, insbesondere aus einem hochtemperaturbeständigen Metall, vorzugsweise aus einer CrNi-Legierung gebildet und an Schweißpunkt-Erhebungen 50 mit der Stützlasche 25 verschweißt.

## Patentansprüche

1. Temperaturfühler mit einem Fühlerrohr (15, 15') und einem darin angeordneten Fühlerstab (16), wobei das Fühlerrohr (15, 15') und der Fühlerstab (16) unterschiedliche Wärmeausdehnungskoeffizienten aufweisen, wobei das eine Ende des Fühlerstabes (16) im Bereich des freien Endes des Fühlerrohres (15, 15') abgestützt und das andere Ende des Fühlerstabes (16) als Betätigungsglied einer von einem Isolationskörper (11) zumindest teilweise umgebenen Schaltkontakt-Einheit (44, 45) ausgebildet ist, und wobei das Fühlerrohr (15, 15') mit dem darin angeordneten Fühlerstab (16) durch eine Durchbrechung (49) des Isolationskörpers (11) hindurchgeführt ist, an welcher Durchbrechung (49) eine Stützlasche (25) vorgesehen ist, die entweder unmittelbar mit dem an der Durchbrechung (49) abgestützten Fühlerrohr (15, 15') oder mit einem in die Durchbrechung (49) eingesetzten Rohrsitz (54) verbunden ist, an welchem Rohrsitz (54) das Fühlerrohr (15, 15') abgestützt ist, **dadurch gekennzeichnet, daß** die Stützlasche (25) mit dem Rohrsitz (54) oder unmittelbar mit dem Fühlerrohr (15') verschweißt ist, sodaß der die Isolationskörper-Durchbrechung (49) umgebende Wandungsbereich des Isolationskörpers (11) zwischen der Stützlasche (25) und dem Rohrsitz (54) bzw. dem Fühlerrohr (15') gehalten ist.

2. Temperaturfühler nach Anspruch 1, **dadurch gekennzeichnet, daß** das Fühlerrohr (15, 15') aus einem Metall, insbesondere aus einem hochtemperaturbeständigen Metall, vorzugsweise aus einer CrNi-Legierung gebildet ist.

3. Temperaturfühler nach Anspruch 1 oder 2, **dadurch gekennzeichnet, daß** die Stützlasche (25) - in an sich bekannter Weise - mindestens eine Bohrung (47) zur Befestigung des Temperaturfühlers (7) an einem Heizkörper (1) aufweist.

4. Temperaturfühler nach Anspruch 1, 2 oder 3, **dadurch gekennzeichnet, daß** der Rohrsitz (54) rohrförmig ausgebildet ist, dessen Außendurchmesser kleiner als der Durchmesser der Isolationskörper-Durchbrechung (49) und dessen Innendurchmesser größer als der Durchmesser des Fühlerrohres (15) ausgebildet ist, und daß an einem Ende des Rohrsitzes (54) ein Rohrflansch (55) ausgebildet ist.

5. Temperaturfühler nach Anspruch 4, **dadurch gekennzeichnet, daß** die Stützlasche (25) eine Durchbrechung (46) aufweist, durch die das Fühlerrohr (15) hindurchgeführt ist, und daß um die Durchbrechung (46) im Bereich der Stoßfläche mit dem Rohrsitz (54) Schweißpunkt-Erhebungen (52) angeordnet sind.

6. Temperaturfühler nach einem der vorhergehenden Ansprüche 1 bis 5, **dadurch gekennzeichnet, daß** das Fühlerrohr (15) über einen flanschförmigen Ansatz (19) an der Isolationskörper-Durchbrechung (49) oder am Rohrsitz (54) abgestützt ist.

7. Temperaturfühler nach einem der vorhergehenden Ansprüche 1 bis 6, **dadurch gekennzeichnet, daß** das Fühlerrohr (15') im Bereich der Isolationskörper-Durchbrechung (49) einen größeren Durchmesser als in seinem vom Isolationskörper (11) vorragenden Bereich aufweist.

## Claims

1. A temperature sensor with a sensor tube (15, 15') and a sensor rod (16) arranged inside it, wherein
the sensor tube (15, 15') and the sensor rod (16) have different thermal expansion coefficients, wherein
the one end of the sensor rod (16) is supported in the region of the free end of the sensor tube (15, 15'), and the other end of the sensor rod (16) is designed as an actuating element of a switch contact unit (44, 45) surrounded at least partially by an insulation body (11), and wherein
the sensor tube (15, 15') with the sensor rod (16) arranged inside it is guided through an aperture (49) in the insulation body (11), at which aperture (49) a support plate (25) is provided, which is connected either directly with the sensor tube (15, 15') supported at the aperture (49), or with a tube seat (54) inserted into the aperture (49), on which tube seat (54) the sensor tube (15, 15') is supported,
**characterised in that** the support plate (25) is welded to the tube seat (54) or directly to the sensor tube (15'), such that the wall region of the insulation body (11) surrounding the insulation body aperture (49) is held between the support plate (25) and the tube seat (54) or the sensor tube (15').

2. The temperature sensor according to Claim 1,
**characterised in that** the sensor tube (15, 15') is formed from a metal, in particular from a high temperature resistant metal, preferably from a CrNi alloy.

3. The temperature sensor according to Claim 1 or 2,
**characterised in that** the support plate (25) in a manner known per se - has at least one hole (47) for the attachment of the temperature sensor (7) to a heating device (1).

4. The temperature sensor according to Claim 1, 2 or 3,
**characterised in that** the tube seat (54) is tubular in design, whose outer diameter is designed to be smaller than the diameter of the insulation body aperture (49), and whose inner diameter is designed to be larger than the diameter of the sensor tube (15), and
**in that** a tube flange (55) is designed at one end of the tube seat (54).

5. The temperature sensor according to Claim 4,
**characterised in that** the support plate (25) has an aperture (46), through which the sensor tube (15) is guided, and
**in that** weld spot elevations (52) are arranged around the aperture (46) in the region of the abutment face with the tube seat (54).

6. The temperature sensor according to one of the preceding Claims 1 to 5,
**characterised in that** the sensor tube (15) is supported via a flange-shaped shoulder (19) on the insulation body aperture (49), or on the tube seat (54).

7. The temperature sensor according to one of the preceding Claims 1 to 6,
**characterised in that** the sensor tube (15') has a larger diameter in the region of the insulation body aperture (49) than in its region projecting from the insulation body (11).

## Revendications

1. Sonde de température avec un tube de sonde (15, 15') et une tige de sonde (16) disposée dans celui-ci, dans lequel le tube de sonde (15, 15') et la tige de sonde (16) ont des coefficients de dilatation thermique différents, dans lequel une extrémité de la tige de sonde (16) s'appuie au niveau de l'extrémité libre du tube de sonde (15, 15') et l'autre extrémité de la tige de sonde (16) est conformée comme un organe d'actionnement d'une unité de contact de commutation (44, 45) au moins partiellement entourée d'un élément isolant (11), et dans lequel le tube de sonde (15, 15') avec la tige de sonde (16) disposée à l'intérieur est passé à travers une ouverture (49) de l'élément isolant (11), laquelle ouverture (49) comporte une patte d'appui (25) qui est soit directement reliée au tube de sonde (15, 15') appuyé sur l'ouverture (49), soit reliée à une assise de tube (54) introduite dans l'ouverture (49), le tube de sonde (15, 15') s'appuyant sur cette assise de tube (54), **caractérisée en ce que** la patte d'appui (25) est soudée à l'assise de tube (54) ou directement au tube de sonde (15'), de sorte que la zone de paroi de l'élément isolant (11) entourant l'ouverture de l'élément isolant (49) est retenue entre la patte d'appui (25) et l'assise de tube (54) ou le tube de sonde (15').

2. Sonde de température selon la revendication 1, **caractérisée en ce que** le tube de sonde (15, 15') est fait d'un métal, en particulier d'un métal résistant à haute température, de préférence d'un alliage CrNi.

3. Sonde de température selon la revendication 1 ou 2, **caractérisée en ce que** la patte d'appui (25) présente, de manière connue, au moins un trou percé (47) pour la fixation de la sonde de température (7) sur un élément chauffant (1).

4. Sonde de température selon la revendication 1, 2 ou 3, **caractérisée en ce que** l'assise de tube (54) est en forme de tube, son diamètre extérieur est plus petit que le diamètre de l'ouverture de l'élément isolant (49) et son diamètre intérieur est plus grand que le diamètre du tube de sonde (15), et **en ce qu'**une bride tubulaire (55) est formée à une extrémité de l'assise de tube (54).

5. Sonde de température selon la revendication 4, **caractérisée en ce que** la patte d'appui (25) présente une ouverture (46) à travers laquelle le tube de sonde (15) est passé, et **en ce qu'**il est prévu autour de l'ouverture (46), dans la zone de la surface de butée sur l'assise de tube (54), des saillies formées de points de soudure (52).

6. Sonde de température selon l'une des revendications 1 à 5, **caractérisée en ce que** le tube de sonde (15) s'appuie par l'intermédiaire d'un épaulement en forme de bride (19) sur l'ouverture de l'élément isolant (49) ou sur l'assise de tube (54).

7. Sonde de température selon l'une des revendications 1 à 6, **caractérisée en ce que** le tube de sonde (15') possède au niveau de l'ouverture de l'élément isolant (49) un plus grand diamètre que dans sa partie dépassant de l'élément isolant (11).
